# EUROPÄISCHE PATENTANMELDUNG

(11) **EP 1 883 013 A2**
(43) Veröffentlichungstag der Anmeldung: **30.01.2008**
(21) Anmeldenummer: 07111648.7
(22) Anmeldetag: 03.07.2007
(51) Int. Cl.: G06F 9/44

(54) **Programmkomponentenmenge, Verfahren und Speichermedium**

(30) Priorität: 18.07.2006 DE 102006033144
(71) Anmelder: ROBERT BOSCH GMBH, 70442 Stuttgart (DE)
(72) Erfinder: Schaefer, Christian, 71065, Sindelfingen (DE); Yigit, Sadi, 71665, Vaihingen (DE); Dreyer, Ulf, 70439, Stuttgart (DE)

(57) **Zusammenfassung**

Eine erfindungsgemäße Programmkomponentenmenge (2) eines Computerprogramms enthält Modellinformationen (4) des dem Computerprogramm zugrunde liegenden Modells, eine Strukturbeschreibung (8) und einen Quellcode (6), wobei der Quellcode (6) gemäß der Strukturbeschreibung (8) aus den Modellinformationen (4) automatisch erzeugbar ist. Ein Verfahren zum Speichern von mindestens einer Komponente der Programmkomponentenmenge (2) umfasst das Speichern der Strukturbeschreibung (8). Ein Verfahren zum Verarbeiten von mindestens einer Komponente der Programmkomponentenmenge (2) umfasst das Aufnehmen einer Strukturbeschreibung (8) als variable Eingangsgröße.

## Beschreibung

Die Erfindung betrifft allgemein das Gebiet des automatischen Erzeugens von Quellcodes von Computerprogrammen. Die Erfindung betrifft insbesondere eine Programmkomponentenmenge eines Computerprogramms nach dem Oberbegriff von Anspruch 1. Eine Programmkomponentenmenge dieser Art ist aus der DE 10 2004 043 788 A1 bekannt.

Die Erfindung betrifft ferner ein Verfahren zum Speichern von mindestens einer Komponente einer erfindungsgemäßen Programmkomponentenmenge nach Anspruch 6 und ein Verfahren zum Verarbeiten von mindestens einer Komponente einer erfindungsgemäßen Programmkomponentenmenge nach Anspruch 7. Ferner betrifft die Erfindung ein Speichermedium nach Anspruch 8.

### Stand der Technik

Die DE 10 2004 043 788 A1 betrifft eine Vorrichtung zum Erstellen ausführbarer Programme. Die Vorrichtung enthält eine Benutzeroberfläche zur Eingabe eines einem Programm zugrunde liegenden Modells und einen Generator zur Erzeugung von individuellem Programmcode aus dem Modell.

Gemäß dem Stand der Technik ist es üblich, dass der Generator der den Programmcode bzw. das Programm automatisch erzeugt, nach einer fest vorgegebenen Strukturbeschreibung arbeitet, d. h. die Art und Weise, wie aus dem Modell der Programmcode erzeugt wird, ist in dem Generator fest implementiert. Gespeichert werden hier lediglich die Modellinformationen und der Quellcode. Ein weiteres Beispiel ist die Software Matlab-Simulink, bei welcher aus Domänendaten Code generiert wird und keine kombinierte Verarbeitung dieser beiden Darstellungen stattfindet.

### Offenbarung der Erfindung

Es ist Aufgabe der vorliegenden Erfindung, in verschiedenen Phasen der Softwaregenerierung möglichst umfangreiche Informationen über den Programmcode zu halten.

Diese Aufgabe wird durch eine Programmkomponentenmenge nach Anspruch 1 gelöst. Ferner wird diese Aufgabe durch ein Verfahren nach Anspruch 6 oder ein Verfahren nach Anspruch 7 gelöst.

Ein wesentlicher Punkt der Erfindung besteht dabei darin, dass neben den Modellinformationen und dem Quellcode auch die Strukturbeschreibung gespeichert und/oder verarbeitet wird, gemäß welcher sich der Quellcode aus den Modellinformationen automatisch erzeugen lässt. In diesem Sinne werden die Modellinformationen, die Strukturbeschreibung und der Quellcode gemeinsam verarbeitet und/oder gespeichert.

Eine Programmkomponentenmenge im Sinne der Erfindung besteht aus oder umfasst den Quellcode sowie eine Menge von zu speichernden Komponenten, die für die automatische Erzeugung des Quellcodes erforderlich sind. Das heißt, die Programmkomponentenmenge enthält mindestens die Modellinformationen, die Strukturbeschreibung und den Quellcode.

Vorteilhafte Weiterbildungen der Programmkomponentenmenge sind in den Unteransprüchen 2 bis 5 angegeben.

Diese betreffen die bevorzugte Verteilung und Speicherung der erfindungsgemäßen Programmkomponentenmenge. Grundsätzlich ist dazu zwar jegliche Kombination bzw. Technologie geeignet, solange diese auf die Speicherung aller drei Komponenten, also von Modell-, Struktur- und Codeinformation hinausläuft. Die genannten Weiterbildungen bieten jedoch Vorteile gleichsam der nachstehend näher erläuterten Speicherart.

Danach sieht eine vorteilhafte Ausführungsform vor, die verschiedenen Komponenten der Programmkomponentenmenge, insbesondere die Modellinformationen, die Strukturbeschreibung und der Quellcode, in jeweils verschiedenen Teilbäumen einer XML-Datei zu halten bzw. zu speichern.

Durch die zusätzliche Speicherung und Verwendung der Strukturbeschreibung können der Quellcode und die Modellinformationen, beispielsweise Domänendaten, besser zueinander in Beziehung gesetzt werden. Dies ermöglicht beispielsweise konsistente Veränderungen an den Modellen.

Die vorstehenden Ausführungen und Definitionen gelten auch für die nachfolgende Beschreibung der Zeichnungen und umgekehrt.

### Kurze Beschreibung der Zeichnungen

Die Erfindung wird im folgenden anhand von Ausführungsbeispielen näher erläutert. Es zeigen:
- Figur 1: eine Ausführungsform einer Programmkomponentenmenge gemäß der Erfindung, und
- Figur 2: eine weitere Ausführungsform einer Programmkomponentenmenge gemäß der Erfindung.

### Ausführungsformen der Erfindung

Eine erfindungsgemäße Programmkomponentenmenge 2 eines Computerprogramms enthält Modellinformationen 4 des dem Computerprogramm zugrunde liegenden Modells.

Die Modellinformationen 4 können beispielsweise Domänendaten sein. Eine Domäne bezeichnet hier ein konkretes Anwendungsgebiet, z.B. eine speicherprogrammierbare Steuerung (SPS). Domänendaten sind dabei variable Daten, über die sich in Verbindung mit der Kenntnis der Domäne ein Projekt besonders einfach definieren lässt.

Ein Computerprogramm kann beispielsweise ein Programm für eine speicherprogrammierbare Steuerung (SPS), eine Bedienoberfläche (HMI) oder eine Software für Antriebe (NC), oder ein beliebiges anders Computerprogramm sein.

Die Programmkomponentenmenge 2 enthält ferner einen Quellcode 6, welcher gemäß einer Strukturbeschreibung 8 aus den Modellinformationen 4 automatisch erzeugbar ist. Gemäß einer Ausführungsform der Erfindung ist der Quellcode 6 direkt ausführbar. Gemäß einer weiteren Ausführungsform kann der Quellcode 6 in ein ausführbares Programm kompilierbar sein. Gemäß einer nochmals weiteren Ausführungsform kann der Quellcode 6 von einem Interpreter interpretierbar sein.

Erfindungsgemäß enthält die Programmkomponentenmenge 2 ferner die Strukturbeschreibung 8 gemäß welcher der Quellcode 6 aus den Modellinformationen 4 automatisch erzeugbar ist. Das heißt, die Strukturbeschreibung 8 gibt an, wie aus den Modellinformationen 4 der Quellcode 6 zu erzeugen ist. In diesem Sinne ist die Strukturbeschreibung 8 mit den Modellinformationen 4 verknüpft. Gemäß der Erfindung kann die Strukturbeschreibung 8 ebenso wie die Modellinformationen 4 veränderbar sein; insbesondere kann die Strukturbeschreibung 8 variable Daten enthalten.

Die Strukturbeschreibung 8 kann im einfachsten Fall ähnlich einem Lückentext aufgebaut sein, wobei die Lücken mit den Modellinformationen 4 gefüllt werden. Ferner kann die Strukturbeschreibung 8 beispielsweise angeben, mit welchen Methoden die Modellinformationen 4 verarbeitet werden.

Während beim Stand der Technik die Modellinformationen starren Vorgaben des verwendeten Code-Generators entsprechen müssen, stellen gemäß der Erfindung die drei Komponenten 'Modellinformationen 4', 'Strukturbeschreibung 8' und 'Quellcode 6' vorzugsweise gleichwertige Komponenten der Programmkomponentenmenge 2 dar, die gemeinsam das betreffende Computerprogramm repräsentieren. Insbesondere können die drei Komponenten veränderbar sein. Die drei Komponenten werden vorzugsweise gemeinsam gespeichert bzw. gemeinsam verarbeitet.

Die drei Komponenten 'Modellinformationen 4', 'Strukturbeschreibung 8' und 'Quellcode 6' der Programmkomponentenmenge 2 sind vorzugsweise so ausgebildet, dass aus jeweils zwei der Komponenten die dritte Komponente ableitbar ist.

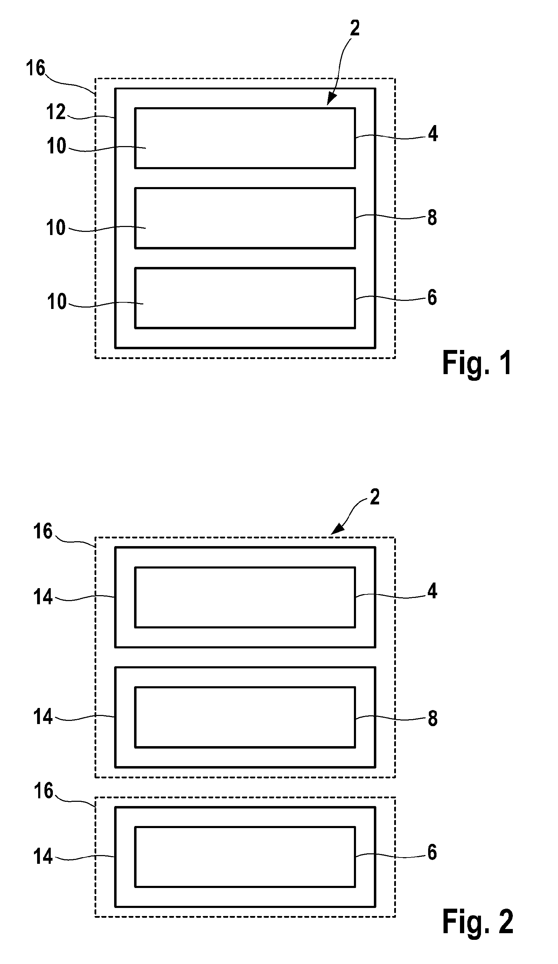

Die Modellinformationen 4, die Strukturbeschreibung 8 und der Quellcode 6 können in einer einzigen Datei gespeichert sein. Insbesondere können die Modellinformationen 4, die Strukturbeschreibung 8 und der Quellcode 6 in jeweils verschiedenen Teilbäumen 10 einer einzigen XML-Datei 12 gespeichert sein, wie in Figur 1 dargestellt.

Alternativ können die Modellinformationen 4, die Strukturbeschreibung 8 und der Quellcode 6 in jeweils einer eigenen Datei 14 gespeichert sein, wie in Figur 2 dargestellt. Beliebige andere Arten der Speicherung der Komponenten 4, 6, 8 der Programmkomponentenmenge 2 sind möglich.

Die Datei 12 bzw. die Dateien 14 können in üblicher Weise auf einem Speichermedium 16, beispielsweise einem zusammenhängenden Speichermedium, wie beispielsweise einer CD (Figur 1) oder auf einem verteilten Speichermedium, wie beispielsweise einem Netzwerk (Figur 2) gespeichert sein.

Insbesondere betrifft die Erfindung ein Speichermedium 16 mit mindestens einer darauf gespeicherten Programmkomponentenmenge 2. Die Darstellung in den Zeichnungen ist hier lediglich beispielhaft. Beliebige andere Arten der Speicherung auf Speichermedien sind möglich.

Neben der Programmkomponentenmenge 2 an sich betrifft die Erfindung ferner ein Verfahren zum Speichern einer erfindungsgemäßen Programmkomponentenmenge 2, wobei das Verfahren den Schritt umfasst, dass die Strukturbeschreibung 8 gespeichert wird.

Das Verfahren zum Speichern kann ferner den Schritt des Speicherns der Modellinformationen 4 enthalten. Das Verfahren kann den Schritt des Speicherns des Quellcodes enthalten.

Insbesondere kann gemäß einer Ausführungsform des Verfahrens die Modellinformationen 4, die Strukturbeschreibung 8 und der Quellcode 6 in einer einzigen Datei 10, insbesondere in jeweils verschiedenen Teilbäumen einer einzigen XML-Datei 10 gespeichert werden.

Alternativ kann vorgesehen sein, dass die Modellinformationen 4, die Strukturbeschreibung 8 und der Quellcode 6 in jeweils einer eigenen Datei 10 gespeichert werden.

Die Verarbeitung einer erfindungsgemäßen Programmkomponentenmenge 2 kann gemäß einem Verfahren erfolgen, welches den Schritt des Aufnehmens der Strukturbeschreibung 8 als variable Eingabegröße umfasst. Das Programm kann ferner das Aufnehmen von mindestens einer weiteren der übrigen Komponenten 'Modellinformationen 4' und 'Quellcode 6' umfassen.

Ein Verfahren zum Verarbeiten einer erfindungsgemäßen Programmkomponentenmenge 2 eines Computerprogramms kann beispielsweise ein Verfahren zum automatischen Erzeugen eines Quellcodes des Computerprogramms sein, wobei das Verfahren in diesem Fall die folgenden Schritte umfasst:
Aufnehmen von Modelldaten des dem Computerprogramm zugrunde liegenden Modells als variable Eingabegröße;
Aufnehmen der Strukturbeschreibung 8 als variable Eingabegröße, und
automatisches Erzeugen des Quellcodes aus den Modelldaten gemäß der Strukturbeschreibung 8 mittels eines Codegenerators.

Die Erfindung ist nicht auf die in den Zeichnungen dargestellten Ausführungsformen beschränkt. Sie ergibt sich vielmehr aus einer fachmännischen Gesamtbetrachtung der Beschreibung, der Zeichnungen und der Patentansprüche.

## Patentansprüche

1. Programmkomponentenmenge (2) eines Computerprogramms enthaltend Modellinformationen (4) des dem Computerprogramm zugrunde liegenden Modells und einen Quellcode (6), wobei der Quellcode (6) gemäß einer Strukturbeschreibung (8) aus den Modellinformationen (4) automatisch erzeugbar ist, **dadurch gekennzeichnet, dass** die Programmkomponentenmenge (2) die Strukturbeschreibung (8) enthält.

2. Programmkomponentenmenge (2) nach Anspruch 1, **dadurch gekennzeichnet, dass** die Strukturbeschreibung (8) veränderbar ist.

3. Programmkomponentenmenge (2) nach Anspruch 1 oder 2, **dadurch gekennzeichnet, dass** die Modellinformationen (4), die Strukturbeschreibung (8) und der Quellcode (6) in einer einzigen Datei (10) gespeichert sind.

4. Programmkomponentenmenge (2) nach Anspruch 3, **dadurch gekennzeichnet, dass** die Modellinformationen (4), die Strukturbeschreibung (8) und der Quellcode (6) in jeweils verschiedenen Teilbäumen einer einzigen XML-Datei (10) gespeichert sind.

5. Programmkomponentenmenge (2) nach einem der Ansprüche 1 oder 2, **dadurch gekennzeichnet, dass** die Modellinformationen (4), die Strukturbeschreibung (8) und der Quellcode (6) in jeweils einer eigenen Datei (10) gespeichert sind.

6. Verfahren zum Speichern von mindestens einer Komponente einer Programmkomponentenmenge (2) nach einem der vorhergehenden Ansprüche, **dadurch gekennzeichnet, dass** die Strukturbeschreibung (8) gespeichert wird.

7. Verfahren zum Verarbeiten von mindestens einer Komponente einer Programmkomponentenmenge (2) nach einem der Ansprüche 1 bis 5, **gekennzeichnet durch** den Schritt des Aufnehmens der Strukturbeschreibung (8) als variable Eingabegröße.

8. Speichermedium (16) enthaltend eine Programmkomponentenmenge (2) nach einem der Ansprüche 1 bis 5.
